# EUROPÄISCHE PATENTSCHRIFT

(11) **EP 3 021 044 B1**
(45) Veröffentlichungstag und Bekanntmachung des Hinweises auf die Patenterteilung: **19.04.2017**
(21) Anmeldenummer: 15194302.4
(22) Anmeldetag: 12.11.2015
(51) Int. Cl.: F21V 17/16, F21S 8/10, F21V 19/00

(54) **LICHTBAUGRUPPE UND VERFAHREN ZUM DREHMOMENTFREIEN ZUSAMMENBAU DER LICHTBAUGRUPPE**
LIGHT ASSEMBLY AND METHOD FOR TORQUE-FREE ASSEMBLY OF THE LIGHT ASSEMBLY
MODULE DE LUMIERE ET PROCEDE D'ASSEMBLAGE EXEMPTE DE COUPLE DU MODULE DE LUMIERE

(30) Priorität: 14.11.2014 DE 102014116684
(43) Veröffentlichungstag der Anmeldung: 18.05.2016
(73) Patentinhaber: Hella KGaA Hueck & Co., 59552 Lippstadt (DE)
(72) Erfinder: Bauder, Alexander, 32278 Kirchlengern (DE)

(56) Entgegenhaltungen:
- WO-A1-2014/190368
- DE-A1- 10 224 004
- DE-A1-102011 081 062
- DE-A1-102012 202 933
- US-A1- 2010 014 287
- US-A1- 2011 156 567

## Beschreibung

Die vorliegende Erfindung betrifft eine Lichtbaugruppe mit einem Kühlkörper, mit einer Trägerplatte zur Aufnahme wenigstens eines LED-Leuchtmittels und mit einem Reflektor, in den ein durch das LED-Leuchtmittel erzeugbares Licht einstrahlbar ist, wobei der Kühlkörper eine Aufnahmefläche aufweist, an der die Trägerplatte und der Reflektor aufeinander liegend angeordnet sind.

### STAND DER TECHNIK

Die DE 10 2012 202 933 A1 zeigt eine Lichtbaugruppe mit einem Kühlkörper, mit einer Trägerplätte zur Aufnahme wenigstens eines LED-Leuchtmittels und mit einem Reflektor, in den ein durch das LED-Leuchtmittel erzeugbares Licht einstrahlbar ist. Der Kühlkörper weist eine Aufnahmefläche auf, an der die Trägerplatte und der Reflektor aufeinander liegend angeordnet sind. Um eine Verbindung des Reflektors mit der Trägerplatte und dem Kühlkörper zu schaffen, werden Schraubelemente verwendet. Werden die Schraubelemente festgezogen, so wird ein Drehmoment auf die zu verbindenden Bauteile aufgegeben, was zu einer Dejustage führen kann. Insbesondere dann, wenn die Trägerplatte mit den LED-Leuchtmitteln relativ zum Reflektor justiert ist, kann die einjustierte Position durch das Festziehen der Schraubelemente wieder verloren gehen. Daher ist eine drehmomentfreie Verbindung zwischen dem Kühlkörper, der Trägerplatte und dem Reflektor wünschenswert.

### OFFENBARUNG DER ERFINDUNG

Aufgabe der Erfindung ist zur Überwindung der aus dem Stand der Technik hervorgehenden Nachteile die Bildung einer Lichtbaugruppe mit einem Kühlkörper, mit einer Trägerplatte und mit einem Reflektor, bei der die Trägerplatte mit dem Reflektor drehmomentfrei am Kühlkörper angeordnet werden sollen. Insbesondere soll bei einer Verbindung des Reflektors, der Trägerplatte und des Kühlkörpers eine Dejustage insbesondere von LED-Leuchtmitteln auf der Trägerplatte relativ zum Reflektor vermieden werden.

Diese Aufgabe wird ausgehend von einer Lichtbaugruppe gemäß dem Oberbegriff des Anspruches 1 sowie gemäß dem Verfahren des Anspruches 8 mit den jeweils kennzeichnenden Merkmalen gelöst. Vorteilhafte Weiterbildungen der Erfindung sind in den abhängigen Ansprüchen angegeben.

Zur Lösung der Aufgabe wird erfindungsgemäß vorgeschlagen, dass sich durch den Kühlkörper, die Trägerplatte und den Reflektor eine gemeinsame Montageöffnung erstreckt, in der ein Federelement und ein Zugelement angeordnet sind, wobei der Kühlkörper, die Trägerplatte und der Reflektor über das Federelement mit einer Vorspannkraft aufeinander liegend verspannt sind, und wobei die Verspannkraft mittels des Zugelementes auf das Federelement aufgebracht ist.

Die Erfindung nutzt vorteilhaft die Möglichkeit, durch den Kühlkörper, die Trägerplatte und den Reflektor eine gemeinsame Montageöffnung einzubringen. Durch das Federelement und das Zugelement wird bei Aufbringung der Verspannkraft kein Drehmoment zwischen dem Reflektor und dem Kühlkörper bzw. der Trägerplatte erzeugt, so dass auch eine Dejustage der Trägerplatte mit den LED-Leuchtmitteln relativ zum Reflektor vermieden wird. Die Verspannkraft kann über das Zugelement eingestellt werden, wobei bei einer Längung des Federelementes ein im Wesentlichen linearer Kraftanstieg über einem Vorspannweg des Federelementes erzeugt wird. Hat die Verspannkraft einen Soll-Wert erreicht, indem das Federelement entsprechend vorgespannt wurde, so kann das Zugelement festgesetzt werden, so dass die Verspannkraft über das Federelement und das Zugelement für den Betrieb der Lichtbaugruppe dauerhaft aufrechterhalten bleibt.

Das Leuchtmittel kann aus einer LED oder aus einem Laser gebildet sein oder das Leuchtmittel kann mehrere LEDs umfassen. Eine Ausführung des Leuchtmittels mit einer konventionellen Lichtquelle, beispielsweise mit einem thermischen Strahler oder einer Gasentladungslampe, ist im Rahmen der Erfindung ebenfalls möglich.

Gemäß einer vorteilhaften Ausführungsform der Lichtbaugruppe kann die Montageöffnung sich gegenüberliegende Mündungsbereiche aufweisen, so dass ein erster Mündungsbereich beispielsweise im Kühlkörper liegt und ein gegenüberliegender zweiter Mündungsbereich liegt im Reflektor, und zwischen den beiden Mündungsbereichen erstreckt sich die Montageöffnung. Das Federelement kann dabei beispielsweise im ersten Mündungsbereich und das Zugelement im gegenüberliegenden zweiten Mündungsbereich einsitzen. Werden das Federelement und das Zugelement in die jeweiligen Mündungsbereiche eingebracht, können diese innenseitig in der Montageöffnung miteinander verbunden werden, wonach die Verspannkraft durch das Zugelement auf das Federelement aufgebracht wird.

Das Federelement kann beispielsweise durch eine Schraubenfeder gebildet sein, und das Federelement kann einen ersten Endbereich mit einem Bund aufweisen, mit dem das Federelement im Mündungsbereich einsitzt. Weiterführend kann das Federelement, insbesondere die Schraubenfeder, einen zweiten Endbereich mit einem Mittelsteg aufweisen, an dem das Zugelement angebunden ist.

Das Zugelement kann einen Teller aufweisen, mit dem das Zugelement im zweiten Mündungsbereich einsitzt und wobei das Zugelement ein Zugband aufweist, das um den Mittelsteg des Federelementes geführt ist. Insbesondere kann das Zugelement in Form eines Kabelbinders ausgebildet sein. Wird um den Mittelsteg mit dem Zugband eine Schlaufe gebildet, kann das Ende des Zugbandes wieder durch den Teller geführt werden, und nach Art eines Kabelbinders kann das Zugband am Teller festgezogen werden. Der eingezogene Bereich des Zugbandes wird dabei im Teller festgesetzt, und ist durch ein hinreichend weites Einziehen des Zugbandes in den Teller das Federelement entsprechend vorgespannt, so ist die Verbindungsanordnung des Kühlkörpers, der Trägerplatte und des Reflektors für den dauerhaften Einsatz fertiggestellt. Gegebenenfalls kann ein aus dem Teller herausragendes Ende des Zugbandes abgetrennt werden.

Das Zugband kann im Teller des Zugelementes mit verschiedenen Bandlängen insbesondere nach Art des Kabelbinders verrastet sein, so dass beispielsweise über einen vorgegebenen Einzugweg des Zugbandes in den Teller die erforderliche Verspannkraft aufgebracht werden kann. Das Aufeinanderdrücken des Kühlkörpers, der Trägerplatte und des Reflektors erfolgt dabei über die Mündungsbereiche, indem der Teller beispielsweise im Mündungsbereich des Reflektors formschließend einsitzt und der Bund des Federelementes sitzt im Mündungsbereich des Kühlkörpers formschließend ein. Um seitliche Kräfte und Kippmomente zu vermeiden, kann der Teller beispielsweise schwimmend im Mündungsbereich des Reflektors einsitzen. Somit kann sich der Teller selbsttätig zur Mittelachse der Verspannkraft ausrichten, ohne dass das Zugband, also beispielsweise der Kabelbinder, das Federelement schräg zieht. Folglich erfolgt die Verbindung des Kühlkörpers mit der Trägerplatte und dem Reflektor nicht nur drehmomentfrei sondern auch frei von Kräften quer zur Führungsrichtung.

Die Erfindung ist weiterhin gerichtet auf ein Verfahren zum Zusammenbau einer Lichtbaugruppe mit einem Kühlkörper, mit einer Trägerplatte zur Aufnahme wenigstens eines LED-Leuchtmittels und mit einem Reflektor, in den ein durch das LED-Leuchtmittel erzeugbares Licht einstrahlbar ist, wobei der Kühlkörper eine Aufnahmefläche aufweist, an der die Trägerplatte und der Reflektor aufeinander liegend angeordnet sind, wobei das Verfahren wenigstens die folgenden Schritte aufweist: Bereitstellen des Kühlkörpers, der Trägerplatte und des Reflektors in einer aufeinander liegenden Anordnung und mit einer gemeinsamen Montageöffnung; Einsetzen eines Federelementes und eines Zugelementes in die Montageöffnung und Aufbringen einer Verspannkraft mittels des Zugelementes auf das Federelement, so dass der Kühlkörper, die Trägerplatte und der Reflektor drehmomentfrei miteinander verbunden sind.

Insbesondere kann sich die Montageöffnung zwischen zwei Mündungsbereichen erstrecken, wobei das Federelement in einen ersten Mündungsbereich eingesetzt wird und wobei das Zugelement in einen gegenüberliegenden zweiten Mündungsbereich der Montageöffnung eingesetzt wird. Das Federelement kann einen Bund umfassen, über den die Verspannkraft auf beispielsweise den Kühlkörper aufgebracht wird, und das Zugelement kann einen Teller aufweisen, der schwimmend im Mündungsbereich der Montageöffnung einsitzt, die sich abschnittsweise durch den Reflektor erstreckt.

Gemäß einer vorteilhaften Ausgestaltung des erfindungsgemäßen Verfahrens kann das Zugelement ein Zugband aufweisen, wobei zur Aufbringung einer Verspannkraft mittels des Zugelementes auf das Federelement vorgesehen ist, dass das Zugband unter Bildung einer Schlaufe um einen Mittelsteg des Federelementes geführt wird und es ist vorgesehen, dass das Zugband anschließend nach Art eines Kabelbinders zugezogen wird, bis die gewünschte Verspannkraft erreicht wird. Das Federelement ist insbesondere als Schraubenfeder ausgeführt und weist auf einem ersten Ende den Bund auf, und auf dem gegenüberliegenden zweiten Ende weist die Schraubenfeder den Mittelsteg auf. Das Zugband kann nach Art eines Kabelbinders flexibel sein, damit dieses um den Mittelsteg des Federelementes insbesondere händisch herumgeführt wird. Anschließend wird das Ende des Zugbandes wieder durch eine Öffnung in den Teller des Zugelementes eingeführt, und das Einziehen des Zugbandes durch den Teller kann auf einer Länge erfolgen, die mit einer bekannten Verspannkraft korrespondiert. Somit kann die Verspannkraft über eine messbare Länge des Durchzugs des Zugbandes durch den Teller eingestellt werden. Das Federelement kann alternativ auch durch eine Spange gebildet sein, die im Mündungsbereich der Montageöffnung einsitzt oder das Federelement ist allgemein durch ein Biegeblech oder durch ein sonstiges Dehnelement gebildet. Wichtig und besonders vorteilhaft dabei ist, dass das Federelement und auch das Zugelement eine Anlage an einer Gegenanlage in den Mündungsbereichen der Montageöffnung bilden, die eine Anlageebene definieren, zu der die über das Federelement aufgebrachte Verspannkraft in einer Lotrechten verläuft.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine perspektivische Ansicht der Lichtbaugruppe,
- Fig. 2: eine weitere perspektivische Ansicht der Lichtbaugruppe,
- Fig. 3: eine quergeschnittene Ansicht der Lichtbaugruppe mit einem Zugelement und einem Federelement in einer nicht verbundenen Anordnung und
- Fig. 4: die quergeschnittene Ansicht gemäß Fig. 3 mit einem Zugelement, das mit einem Federelement in Verbindung gebracht ist und das das Federelement mit einer Verspannkraft verspannt.

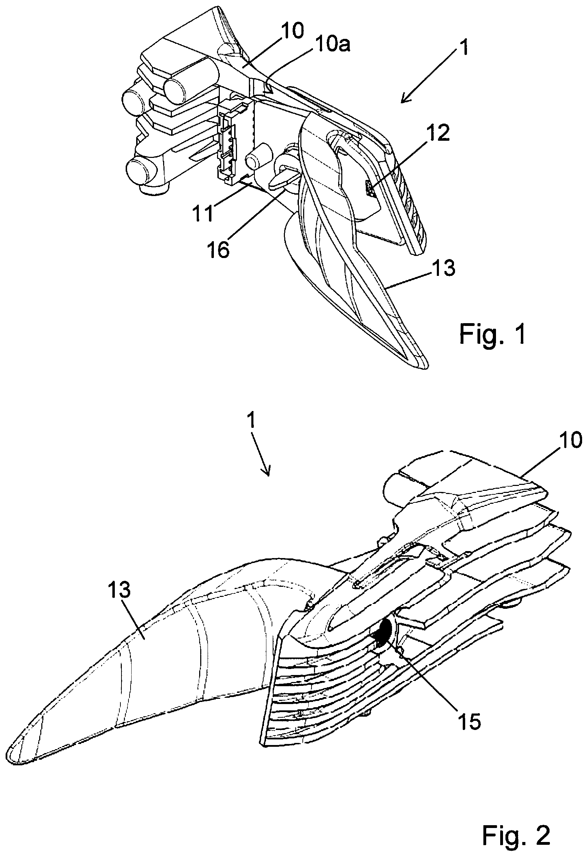

Die Figuren 1 und 2 zeigen die erfindungsgemäße Lichtbaugruppe 1 in verschiedenen Perspektiven, und Figur 1 zeigt die Baugruppe 1 aus Richtung des Reflektors 13 und Figur 2 zeigt die Baugruppe 1 aus Richtung des Kühlkörpers 10.

Die Lichtbaugruppe 1 umfasst einen Kühlkörper 10, eine Trägerplatte 11 zur Aufnahme von LED-Leuchtmitteln 12 und einen Reflektor 13. Die Lichtbaugruppe 1 kann zur Erzeugung einer Hauptlichtfunktion dienen, beispielsweise eines Abblendlichtes, wobei die gezeigte Baugruppe 1 auch nur einen Teil eines Lichtfeldes bilden kann oder die Lichtbaugruppe dient zur Erfüllung einer Zusatz- oder Signallichtfunktion. Die Lichtbaugruppe 1 ist ausgeführt zur Aufnahme im Gehäuse eines Scheinwerfers, wobei die Baugruppe 1 beispielsweise über den Kühlkörper 10 an einer entsprechenden Befestigung aufgenommen werden kann.

Der Kühlkörper 10 weist auf einer Vorderseite eine im Wesentlichen plan ausgeführte Aufnahmefläche 10a auf, und auf der Aufnahmefläche 10a sitzt eine Trägerplatte 11 auf. Die Trägerplatte 11 kann bevorzugt als Leiterplatte ausgeführt sein und zugleich die LED-Leuchtmittel 12 entwärmen, so dass Wärme, die im Betrieb der LED-Leuchtmittel 12 erzeugt wird, durch die Trägerplatte 11 in den Kühlkörper 10 abgeleitet werden kann. Folglich kann die Trägerplatte 11 bevorzugt plan an der Aufnahmefläche 10a anliegen. Auf der Vorderseite der Trägerplatte 11 sitzt ein Reflektor 13 auf, und der Reflektor 13 erstreckt sich bogenförmig so über dem Leuchtmittel 12, das dieses bei entsprechender Bestromung Licht in den Reflektor 13 einstrahlt.

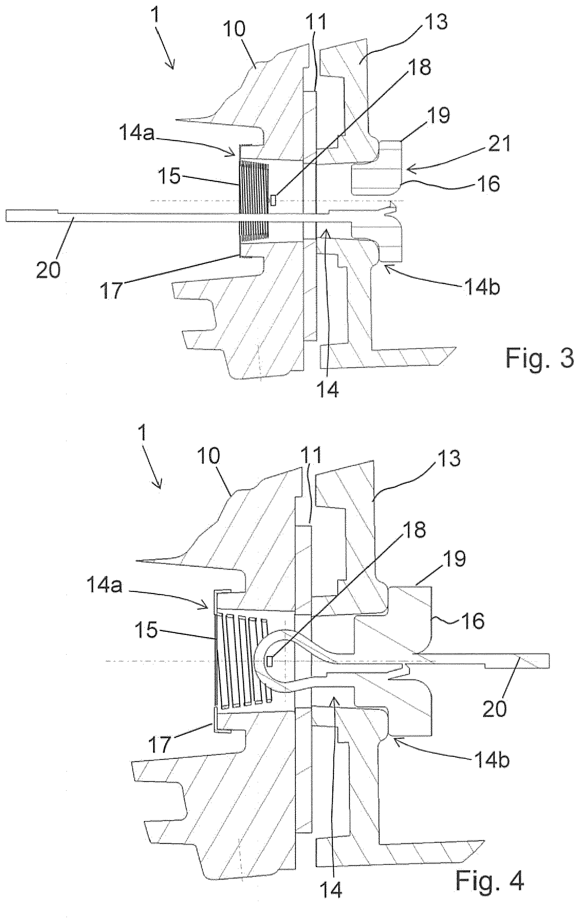

Zur Befestigung der Bauteile umfassend den Kühlkörper 10, die Trägerplatte 11 und den Reflektor 13 dient eine Anordnung aus einem Federelement 15 und einem Zugelement 16, wobei das Zugelement 16 in Fig. 1 von der Seite des Reflektors 13 gezeigt ist, und das Federelement 15 ist in Fig. 2 von der Rückseite des Kühlkörpers 10 sichtbar. Der Aufbau und die Funktionsweise des Verbindungsmittels zwischen dem Kühlkörper 10, der Trägerplatte 11 und dem Reflektor 13 ist in Zusammenhang mit den folgenden Fig. 3 und 4 näher beschrieben.

Die Figuren 3 und 4 zeigen eine Querschnittsansicht durch die Lichtbaugruppe 1, umfassend den Kühlkörper 10, die Trägerplatte 11 und den Reflektor 13. Durch den Kühlkörper 10, die Trägerplatte 11 und den Reflektor 13 erstreckt sich eine gemeinsame Montageöffnung 14 hindurch, und die Montageöffnung 14 verläuft zwischen zwei Mündungsbereichen 14a und 14b. Ein erster Mündungsberich 14a befindet sich im Kühlkörper 10, und ein gegenüberliegender zweiter Mündungsbereich 14b befindet sich im Reflektor 13. Um eine Verbindung zwischen dem Kühlkörper 10, der Trägerplatte 11 und dem Reflektor 13 zu schaffen, ist im ersten Mündungsbereich 14a ein als Schraubenfeder ausgeführtes Federelement 15 eingesetzt, wobei das Federelement 15 einen Bund 17 umfasst, der einen entsprechenden, korrespondierend ausgeführten inneren Teil des Mündungsbereiches 14 des Kühlkörpers 10 umgreift. Auf der gegenüberliegenden Seite ist im zweiten Mündungsbereich 14b im Reflektor 13 ein Zugelement 16 eingebracht, welches nach Art eines Kabelbinders 21 ausgeführt ist. Das Zugelement 16 umfasst einen Teller 19, der im zweiten Mündungsbereich 14b so einsitzt, dass dieser schwimmend über eine angeformte Schulter am Teller 19 in einen korrespondierend ausgeführten Bund im Mündungsbereich 14b des Reflektors 13 aufsitzt. Das Zugelement 16 umfasst weiterhin ein Zugband 20, das sich vom Teller 19 heraus erstreckt, und das Zugband 20 kann durch eine weitere Öffnung im Teller 19 hindurchgeführt und in diesem verrastet werden. Somit ist das Zugelement 16 im Wesentlichen nach Art eines Kabelbinders ausgeführt.

Zur Herstellung der Verbindung zwischen dem Kühlkörper 10, der Trägerplatte 11 und dem Reflektor 13 wird das Zugband 20 des Zugelementes 16 mit dem Federelement 15 in Verbindung gebracht, wie in Fig. 4 gezeigt. Hierfür weist das Federelement 15 einen Mittelsteg 18 auf, der sich an dem gegenüberliegenden Ende des Endes des Federelementes 15 befindet, an dem der Bund 17 angebracht ist. Wird das Zugband 20 um den Mittelsteg 18 herumgeführt, so kann das Zugband 20 anschließend durch den Teller 19 hindurchgeführt und in diesem verrastet werden. Unter Bildung einer Schlaufe, die um den Mittelsteg 18 herum geführt ist, kann das Zugband 20 nunmehr in den Teller 19 eingezogen werden, wodurch sich das Federelement 15 längt. Durch die Längung des Federelementes 15 wird eine Verspannkraft zwischen dem Kühlkörper 10, der Trägerplatte 11 und dem Reflektor 13 erzeugt, und die Verspannkraft kann eingestellt werden über die Länge des Zugbandes 20, mit der dieses durch den Teller 19 hindurch gezogen wird.

Die gezeigte Verbindung zwischen dem Kühlkörper 10, der Trägerplatte 11 und dem Reflektor 13 zeichnet sich dadurch aus, dass ausschließlich eine Axialkraft in Erstreckungsrichtung der Montageöffnung 14 aufgebracht wird. Die Verbindung erfolgt folglich drehmoment- und querkraftfrei, insbesondere durch die mittige Anordnung des Mittelsteges 18 wird das Federelement 15 nicht schräg gezogen. Durch die schwimmende Auflage des Tellers 19 in dem Mündungsbereich 14b des Reflektors 13 können Querkräfte zusätzlich vermieden werden. Ein weiterer Vorteil besteht darin, dass die Verspannkraft einfach eingestellt werden kann durch die Länge des Zugbandes 20, das unter Bildung einer Schlaufe um den Mittelsteg 18 durch den Teller 19 zurückgezogen wird. Das Einstellen kann folglich manuell oder mit einem Greifer unter Kraftmessung oder bevorzugt unter einer Wegmessung erfolgen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumlicher Anordnungen und Verfahrensschritte können sowohl für sich als auch in den verschiedensten Kombinationen erfindungswesentlich sein.

### Bezugszeichenliste

- 1: Lichtbaugruppe

- 10: Kühlkörper
- 10a: Aufnahmefläche
- 11: Trägerplatte
- 12: Leuchtmittel
- 13: Reflektor
- 14: Montageöffnung
- 14a: erster Mündungsbereich
- 14b: zweiter Mündungsbereich
- 15: Federelement
- 16: Zugelement
- 17: Bund
- 18: Mittelsteg
- 19: Teller
- 20: Zugband
- 21: Kabelbinder

## Patentansprüche

1. Lichtbaugruppe (1) mit einem Kühlkörper (10), mit einer Trägerplatte (11) zur Aufnahme wenigstens eines Leuchtmittels (12) und mit einem Reflektor (13), in den ein durch das Leuchtmittel (12) erzeugbares Licht einstrahlbar ist, wobei der Kühlkörper (10) eine Aufnahmefläche (10a) aufweist, an der die Trägerplatte (11) und der Reflektor (13) aufeinander liegend angeordnet sind, **dadurch gekennzeichnet, dass** sich durch den Kühlkörper (10), die Trägerplatte (11) und den Reflektor (13) eine gemeinsame Montageöffnung (14) erstreckt, in der ein Federelement (15) und ein Zugelement (16) angeordnet sind, wobei der Kühlkörper (10), die Trägerplatte (11) und der Reflektor (13) über das Federelement (15) mit einer Verspannkraft aufeinander liegend verspannt sind, wobei die Verspannkraft mittels des Zugelementes (16) auf das Federelement (15) aufgebracht ist.

2. Lichtbaugruppe (1) nach Anspruch 1, **dadurch gekennzeichnet, dass** die Montageöffnung (14) sich zwischen einem ersten Mündungsbereich (14a) und einen gegenüberliegenden zweiten Mündungsbereich (14b) erstreckt, wobei das Federelement (15) im ersten Mündungsbereich (14a) und das Zugelement (16) im gegenüberliegenden zweiten Mündungsbereich (14b) einsitzt.

3. Lichtbaugruppe (1) nach Anspruch 1 oder 2, **dadurch gekennzeichnet, dass** das Federelement (15) durch eine Schraubenfeder gebildet ist und einen ersten Endbereich mit einem Bund (17) aufweist, mit dem das Federelement (15) im Mündungsbereich (14a) einsitzt.

4. Lichtbaugruppe (1) nach einem der Ansprüche 1 bis 3, **dadurch gekennzeichnet, dass** das Federelement (15) einen zweiten Endbereich mit einem Mittelsteg (18) aufweist, an den das Zugelement (16) angebunden ist.

5. Lichtbaugruppe (1) nach einem der vorgenannten Ansprüche, **dadurch gekennzeichnet, dass** das Zugelement (16) einen Teller (19) aufweist, mit dem das Zugelement (16) im zweiten Mündungsbereich (14b) einsitzt und wobei das Zugelement (16) ein Zugband (20) aufweist, das um den Mittelsteg (18) des Federelementes (15) geführt ist.

6. Lichtbaugruppe (1) nach einem der vorgenannten Ansprüche, **dadurch gekennzeichnet, dass** das Zugelement (16) als Kabelbinder (21) ausgebildet ist.

7. Lichtbaugruppe (1) nach einem der vorgenannten Ansprüche, **dadurch gekennzeichnet, dass** das Zugband (20) im Teller (19) des Zugelementes (16) bei verschiedenen Bandlängen nach Art eines Kabelbinders (21) verrastbar ist.

8. Verfahren zum Zusammenbau einer Lichtbaugruppe (1) mit einem Kühlkörper (10), mit einer Trägerplatte (11) zur Aufnahme wenigstens eines Leuchtmittels (12) und mit einem Reflektor (13), in den ein durch das Leuchtmittel (12) erzeugbares Licht einstrahlbar ist, wobei der Kühlkörper (10) eine Aufnahmefläche (10a) aufweist, an der die Trägerplatte (11) und der Reflektor (13) aufeinander liegend angeordnet sind, wobei das Verfahren wenigstens die folgenden Schritte aufweist:
- Bereitstellen des Kühlkörpers (10), der Trägerplatte (11) und des Reflektors (13) in einer aufeinander liegenden Anordnung und mit einer gemeinsamen Montageöffnung (14),
- Einsetzen eines Federelementes (15) und eines Zugelementes (16) in einer gegenüberliegenden Anordnung in die Montageöffnung (14) und
- Aufbringen einer Verspannkraft mittels des Zugelementes (16) auf das Federelement (15) senkrecht zur Aufnahmefläche (10a), sodass der Kühlkörper (10), die Trägerplatte (11) und der Reflektor (13) drehmomentfrei miteinander verbunden sind.

9. Verfahren nach Anspruch 8, **dadurch gekennzeichnet, dass** sich die Montageöffnung (14) zwischen zwei Mündungsbereichen (14a, 14b) erstreckt, wobei das Federelement (15) in einen ersten Mündungsbereich (14a) und wobei das Zugelement (16) in einen gegenüberliegenden zweiten Mündungsbereich (14b) eingesetzt wird.

10. Verfahren nach einem der Ansprüche 8 oder 9, **dadurch gekennzeichnet, dass** das Zugelement (16) ein Zugband (20) aufweist, wobei zur Aufbringung einer Verspannkraft mittels des Zugelementes (16) auf das Federelement (15) vorgesehen ist, dass
- das Zugband (20) unter Bildung einer Schlaufe um einen Mittelsteg (18) des Federelementes (15) geführt wird und dass
- das Zugband anschließend nach Art eines Kabelbinders (21) zugezogen wird, bis die gewünschte Verspannkraft erreicht ist.

## Claims

1. Light assembly (1) having a heatsink (10), a carrier plate (11) for the reception of at least one illuminant (12) and a reflector (13) into which light which can be generated by the illuminant (12) can be radiated, wherein the heatsink (10) has a receiving surface (10a) on which the carrier plate (11) and the reflector (13) are arranged on top of each other,
**characterized in that** a common assembly opening (14) extends through the heatsink (10), the carrier plate (11) and the reflector (13), in which a spring element (15) and a tensioning element (16) are arranged; the heatsink (10), the carrier plate (11) and the reflector (13) being braced on top of each other via the spring element (15), the tensioning force being applied to the spring element (15) by means of the tensioning element (16).

2. Light assembly (1) according to Claim 1, **characterized in that** the assembly opening (14) extends between a first opening area (14a) and an opposite second opening area (14b), wherein the spring element (15) is placed in the first opening area (14a) and the tensioning element (16) in the opposite second opening area (14b).

3. Light assembly (1) according to Claim 1 or 2, **characterized in that** the spring element (15) is embodied by a helical spring and has a first end area with a collar (17) in the opening area (14a) of which the spring element (15) is placed.

4. Light assembly (1) according to one of the Claims 1 to 3, **characterized in that** the spring element (15) has a second end area with a central web (18) to which the tensioning element (16) is tied.

5. Light assembly (1) according to one of the above Claims, **characterized in that** the tensioning element (16) has a disc (19) by means of which the tensioning element (16) is situated in the second opening area (14b) and wherein the tensioning element (16) has a pull strap (20) being guided around the center web (18) of the spring element (15).

6. Light assembly (1) according to one of the above Claims, **characterized in that** the tensioning element (16) is embodied as a cable tie (21).

7. Light assembly (1) according to one of the above Claims, **characterized in that** the pull strap (20) in case of different lengths can engage in the disk (19) of the tensioning element (16) in the manner of a cable tie (21).

8. Method for the assembly of a light assembly (1) having a heatsink (10), a carrier plate (11) for the reception of at least one illuminant (12) and having a reflector (13) into which light which can be generated by the illuminant (12) can be radiated, wherein the heatsink (10) has a receiving surface (10a) on which the carrier plate (11) and the reflector (13) are arranged on top of each other, the method comprising at least the following steps:
- Provision of the heatsink (10), the carrier plate (11) and the reflector (13) being arranged on top of one another and having a common assembly opening (14),
- Insertion of a spring element (15) and a tensioning element (16) being arranged on opposite sides of the assembly opening (14) and
- Application of a tensioning force to the spring element (15) vertically to the reception surface (10a) by means of the tensioning element (16), so that the heatsink (10), the carrier plate (11) and the reflector (13) are connected torque-free.

9. Method according to Claim 8, **characterized in that** the assembly opening (14) extends between two opening areas (14a, 14b), wherein the spring element (15) is inserted in a first opening area (14a) and the tensioning element (16) is inserted in a second opening area (14b).

10. Method according to one of the Claims 8 or 9, **characterized in that** the tensioning element (16) has a pull strap (20), wherein for the application of a tensioning force to the spring element (15) by means of the tensioning element (16) it is provided that
- the pull strap (20) is guided around a center web (18) of the spring element (16) while forming a loop
- the pull strap is subsequently drawn tight in the manner of a cable tie (21) until the desired tensioning force is achieved.

## Revendications

1. Module lumineux (1) avec un corps de refroidissement (10), avec une plaque support (11) pour le logement d'au moins un moyen d'éclairage (12) et avec un réflecteur (13) dans lequel une lumière étant générée par le moyen d'éclairage (12) peut être émise, le corps de refroidissement (10) présentant une surface de logement (10a) sur laquelle la plaque support (11) et le réflecteur (13) sont disposés de manière superposée,
**caractérisée en ce qu'**
une ouverture de montage commune (14) s'étend à travers le corps de refroidissement (10), la plaque support (11) et le réflecteur (13) dans laquelle un élément à ressort (15) et un élément de traction (16) sont disposés, le corps de refroidissement (10), la plaque support (11) et le réflecteur (13) étant serrés de manière superposée avec un effort de serrage par le biais de l'élément à ressort (15), l'effort de serrage étant appliqué par le biais de l'élément de traction (16) sur l'élément à ressort (15).

2. Module lumineux (1) selon la revendication 1, **caractérisée en ce que** l'ouverture de montage (14) s'étend entre une première zone d'embouchure (14a) et une deuxième zone d'embouchure (14b) opposée, l'élément à ressort (15) étant placé dans la première zone d'embouchure (14a) et l'élément de traction (16) dans la deuxième zone d'embouchure (14b) opposée.

3. Module lumineux (1) selon la revendication 1 ou 2, **caractérisée en ce que** l'élément à ressort (15) est formé par un ressort hélicoïdal et présente une première zone d'extrémité avec un épaulement (17) avec lequel l'élément à ressort (15) est placé dans la zone d'embouchure (14a).

4. Module lumineux (1) selon l'une des revendications 1 à 3, **caractérisée en ce que** l'élément à ressort (15) présente une deuxième zone d'extrémité avec une barrette centrale (18) sur laquelle l'élément de traction (16) est attaché.

5. Module lumineux (1) selon l'une des revendications précédentes, **caractérisée en ce que** l'élément de traction (16) présente un plateau (19) avec lequel l'élément de traction (16) est placé dans la deuxième zone d'embouchure (14b) et l'élément de traction (16) présentant un tirant (20) qui est guidé autour de la barrette centrale (18) de l'élément à ressort (15).

6. Module lumineux (1) selon l'une des revendications précédentes, **caractérisée en ce que** l'élément de traction (16) est réalisé en tant qu'attache-câbles (21).

7. Module lumineux (1) selon l'une des revendications précédentes, **caractérisée en ce que** le tirant (20) peut être accroché au plateau (19) de l'élément de traction (16) en cas de différentes longueurs de ruban à la manière d'une attache-câbles (21).

8. Procédé pour le montage d'un module lumineux (1) avec un corps de refroidissement (10), avec une plaque support (11) pour le logement d'au moins un moyen d'éclairage (12) et avec un réflecteur (13) dans lequel une lumière étant générée par le moyen d'éclairage (12) peut être émise, le corps de refroidissement (10) présentant une surface de logement (10a) sur laquelle la plaque support (11) et le réflecteur (13) sont disposés de manière superposée, le procédé présentant au moins les étapes suivantes :
- mise à disposition du corps de refroidissement (10), de la plaque support (11) et du réflecteur (13) dans un agencement superposé et avec une ouverture de montage commune (14),
- insertion d'un élément à ressort (15) et d'un élément de traction (16) dans un agencement opposé dans l'ouverture de montage (14) et
- application d'un effort de serrage par l'élément de traction (16) sur l'élément à ressort (15) perpendiculairement à la surface de logement (10a) de manière à ce que le corps de refroidissement (10), la plaque support (11) et le réflecteur (13) soient reliés l'un à l'autre sans couple.

9. Procédé selon la revendication 8, **caractérisée en ce que** l'ouverture de montage (14) s'étend entre deux zones d'embouchure (14a, 14b), l'élément à ressort (15) étant placé dans une première zone d'embouchure (14a) et l'élément de traction (16) étant placé dans une deuxième zone d'embouchure (14b) opposée.

10. Procédé selon l'une des revendications 8 ou 9, **caractérisée en ce que** l'élément de traction (16) présente un tirant (20), pour appliquer un effort de serrage par l'élément de traction (16) sur l'élément à ressort (15) étant prévu que
- le tirant (20) est guidé autour d'une barrette centrale (18) de l'élément à ressort (15) en formant une boucle et que
- le tirant sera ensuite tiré à la manière d'une attache-câbles (21) jusqu'à l'atteinte de l'effort de serrage désiré.
